**Europäisches Patentamt**

**European Patent Office**

**Office européen des brevets**

(19)

(11) Numéro de publication: **0 002 402**
**A1**

(12)

# DEMANDE DE BREVET EUROPEEN

(21) Numéro de dépôt: **78400180.2**

(22) Date de dépôt: **14.11.78**

(51) Int. Cl.²: **A 47 L 9/10**
**B 01 D 50/00**

(30) Priorité: **24.11.77 FR 7735415**

(43) Date de publication de la demande:
**13.06.79 Bulletin 79/12**

(84) Etats contractants désignés:
**BE CH DE GB LU NL**

(71) Demandeur: **Babault, Paul Louis**
**Le Tranchoir**
**F-45500 Gien(FR)**

(72) Inventeur: **Babault, Paul Louis**
**Le Tranchoir**
**F-45500 Gien(FR)**

(74) Mandataire: **Boukhors, Alain et al,**
**Cabinet BEAU de LOMENIE 55, Rue d'Amsterdam**
**F-75008 Paris(FR)**

(54) **Aspirateur à double filtrage.**

(57) Il comporte un circuit principal dans lequel de l'air à épurer, entraîné par une soufflerie 1, pénètre par une entrée et traverse un premier moyen de filtrage constitué par un liquide vidangeable de filtration 5, puis un second moyen de filtrage, constitué par un corps poreux 11 avant d'être évacué à l'extérieur: il comprend en outre un circuit de dérivation dans lequel est entraînée une partie de l'air se trouvant dans le circuit principal immédiatement en amont du second moyen de filtrage pour être réinjectée en un point du circuit principal situé en amont du premier moyen de filtrage.

L'invention s'applique notamment aux aspirateurs d'amiante.

Fig. 2

EP 0 002 402 A1

- 1 -

0002402

Aspirateur à double filtrage.

La présente invention concerne un aspirateur du type comportant un circuit principal dans lequel de l'air à épurer, entraîné par une soufflerie, pénètre par une entrée et traverse au moins un premier moyen de filtrage comprenant un liquide vidangeable de filtration puis au moins un second moyen de filtrage comprenant un corps poreux avant d'être évacué à l'extérieur.

L'invention a notamment pour but de réaliser un aspirateur dans lequel on évite le colmatage prématuré du second moyen de filtrage.

Ce but est atteint, conformément à l'invention, du fait que l'aspirateur comprend en outre un circuit de dérivation dans lequel est entraînée une partie de l'air se trouvant dans le circuit principal immédiatement en amont du second moyen de filtrage pour être réinjectée en un point du circuit principal situé en amont du premier moyen de filtrage.

Ce circuit de dérivation permet le recyclage de poussière "folles" ayant traversé le premier moyen de filtrage sans avoir été mouillées. Ces poussières vont donc pouvoir être retenues par le premier moyen de filtrage qui, par nature, n'est pas colmatable. Il en résulte une augmentation notable de la durée de service des filtres poreux constituant le second moyen de filtrage.

Avantageusement, le second moyen de filtrage comprend au moins un filtre tubulaire en matière poreuse, dont le volume intérieur est situé à la fois sur le circuit principal et sur le circuit de dérivation.

Avantageusement, l'air dans le circuit de dérivation est entraîné par une dépression établie dans une partie périphérique d'une chambre qui est située à la jonction du circuit principal et du circuit de dérivation en amont du premier moyen de filtrage, chambre dont la partie centrale est parcourue sous la forme de jet par l'air à épurer propulsé par la soufflerie, un conduit d'amenée d'air du circuit principal débouchant dans ladite partie centrale de cette chambre et un conduit d'amenée d'air du circuit de dérivation débouchant dans la partie périphérique de ladite chambre.

D'autres caractéristiques et avantages de l'invention seront meix compris à la lecture de la description qui va suivre d'un exemple de réalisation et en se référant aux dessins annexés dans lesquels :

- La figure 1 est une vue partielle en perspective d'un aspirateur selon un mode de réalisation de l'invention ;

- La figure 2 est une coupe selon le plan vertical II-II de la figure 1 ; et

- La figure 3 est une coupe suivant le plan horizontal III-III de la figure 2.

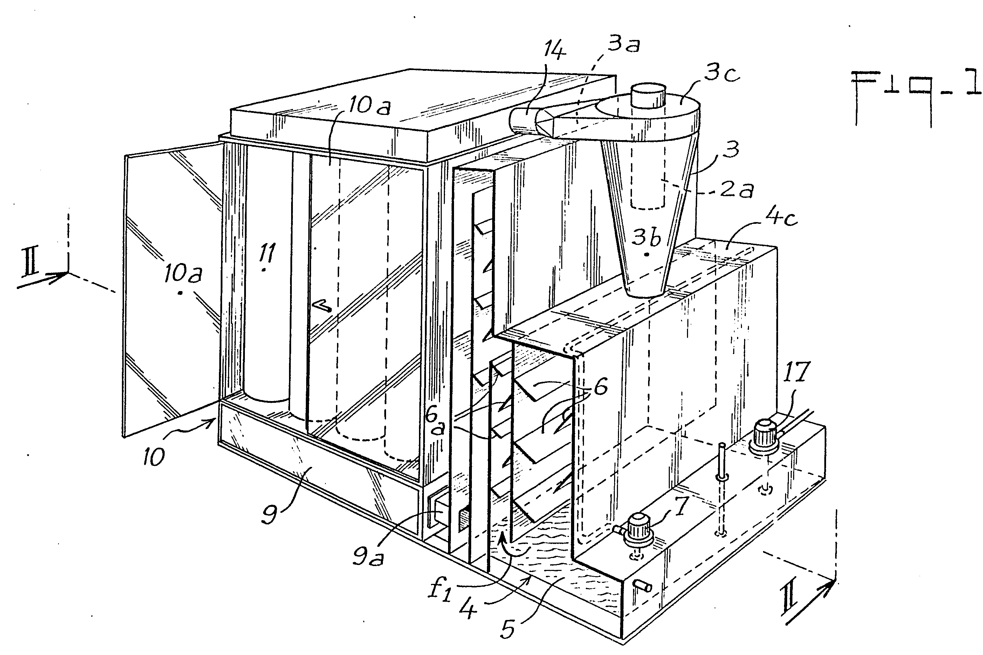

L'aspirateur représenté aux dessins comprend une soufflerie 1 reliée, du côté aspiration, à une canalisation non représentée aboutissant à une entrée d'air chargé d'impuretés, telles que poussières, fibres d'amiante, etc. ; la soufflerie 1 est reliée, du côté refoulement, par l'intermédiaire d'un conduit 2, à un dispositif de dispersion et d'aspiration de recyclage 3 qui sera décrit en détail plus loin. L'air descendant issu du dispositif 3 traverse un premier dispositif de filtrage placé immédiatement en dessous et en aval dudit dispositif 3 ; ce premier dispositif de filtrage comprend une enceinte 4 contenant une nappe d'eau 5 à son extrémité inférieure ; l'enceinte est munie de parois verticales 4a, 4b portant chacune des volets fixes formant chicane 6 inclinés vers le bas et sur lesquels de l'eau, prélevée dans la nappe 5 au moyen d'une pompe 7, est pulvérisée au moyen de gicleurs

0002402

tels que 8. Sur la figure 1, on a représenté l'enceinte 4 sans sa paroi avant, afin de laisser voir les différentes parties de cette enceinte 4. La paroi intérieure 4b de l'enceinte 4 présente un bord inférieur libre immergé dans la nappe 5, de sorte que l'air descendant du dispositif 3 et ayant traversé les chicanes ménagées entre les volets 6, traverse obligatoirement l'eau de la nappe 5 (flèche $f_1$) avant de remonter vers d'autres chicanes ménagées entre d'autres volets inclinés 6a, puis pénètre par une entrée 9a dans un caisson inférieur 9 d'une armoire à filtres 10 décrite ci-après.

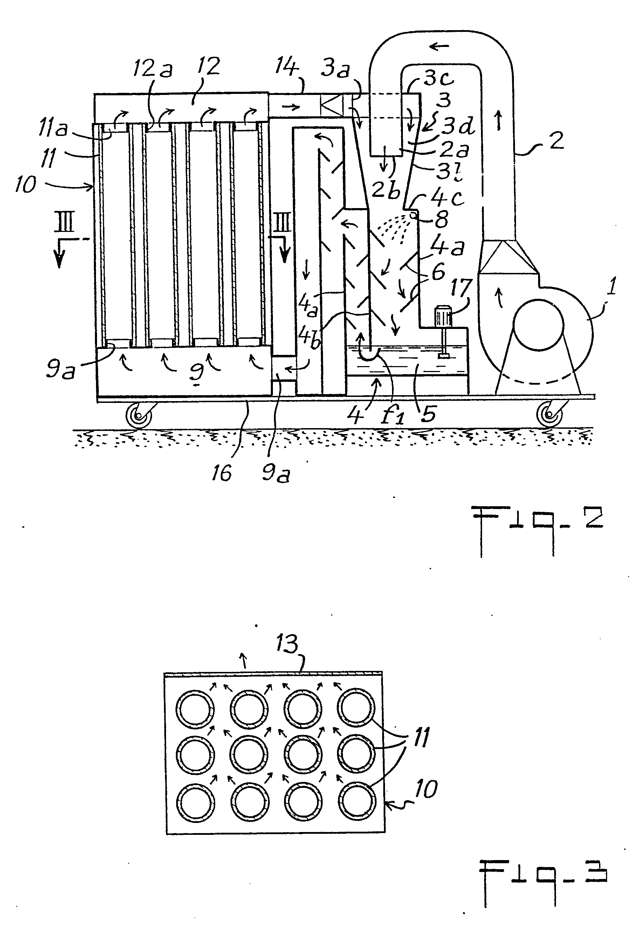

L'armoire 10 comprend plusieurs filtres tubulaires, verticaux, juxtaposés 11, interposés en parallèle entre, d'une part, le caisson inférieur 9 et, d'autre part, un caisson supérieur 12. L'armoire 10 est fermée de façon sensiblement étanche à l'air sur toutes ses faces, sauf sur sa face arrière qui est munie d'une paroi poreuse filtrante 13 (figure 3).

Le caisson 12 est relié par une conduite 14 à l'entrée périphérique 3a du dispositif 3. Ce dispositif 3 comprend une paroi latérale tronconique, d'axe vertical s'amincissant vers le bas 3b qui est fermée à son extrémité supérieure par une paroi horizontale 3c et qui se raccorde à son extrémité inférieure avec la paroi supérieure 4c de l'enceinte 4. Le conduit 2 traverse de façon étanche la paroi 3c et débouche dans le dispositif 3 par un tronçon 2a d'axe vertical coaxial à la paroi 3b et ouvert à son extrémité inférieure libre 2b.

Le flux d'air descendant sortant du tronçon 2a crée une dépression dans l'espace annulaire 3d qui est délimité entre ledit tronçon 2a et l'extrémité supérieure de la paroi 3b, et dans lequel débouche l'entrée 3a. Cette dépression, qui est transmise au caisson 12, établit un courant d'air de recyclage allant de l'extrémité supérieure 11a des filtres tubulaires 11 au dispositif 3.

Comme on peut le voir sur la figure 2, chaque filtre 11 est emmanché à chacune de ses extrémités

0002402

ouvertes, sur un raccord de faible hauteur 9a et 12a,
respectivement, du caisson 9 et 12.

Un collier de serrage, non représenté, peut renforcer la
fixation de chaque filtre 11 sur chacun desdits raccords
9a, 12a ; cette fixation doit permettre un remplacement
aisé des filtres 11.

La paroi avant de l'armoire 10 est rendue ouvrante, par
exemple sous la forme de deux vantaux 10a comme représenté à la figure 1, afin de ménager un accès aisé aux filtres 11.

L'ensemble des organes de l'aspirateur qui vient
d'être décrit est avantageusement monté sur un châssis
roulant 16 (figure 2) afin de faciliter son déplacement
d'un poste de travail à l'autre.

L'enceinte 4 est avantageusement construite avec
des plaques de plastique ayant une bonne résistance à la
corrosion et aux déformations mécaniques.

Ainsi, grâce à l'invention, les poussières "folles" qui n'auraient pas été mouillées, ni retenues par le
filtre humide 4 à 8 lors de leur premier passage à travers
ce filtre, sont recyclées, grâce au circuit de dérivation
constitué par l'extrémité supérieure ouverte 11a des filtres 11, le caisson supérieur 12, la conduite 14 et le
dispositif 3. L'air est entraîné dans ce circuit de dérivation grâce à la dépression établie dans l'espace 3d et le
caisson 12 par le dispositif 3. Ce recyclage des poussières
"folles" évite tout colmatage des filtres 11. De plus, ces
poussières arrivant par la partie périphérique 3d du dispositif 3 sont dispersées dans ce dispositif grâce à la turbulence de l'écoulement d'air à cet endroit et sont projetées sur les volets 6 des premières chicanes avant d'être
retenues dans la nappe d'eau 5.

Les boues (mélange d'eau et de poussières) sont
évacuées par une pompe 17 vers un container non représenté.

On comprend que le débit du courant d'air de
recyclage est d'autant plus grand que la rétention des

- 5 -

0002402

poussières par les filtres 11 est plus grande, de sorte que ce recyclage d'air contribue à maintenir constant le débit d'air entraîné par la soufflerie 1 et évacué, une fois épuré, à travers la paroi poreuse des filtres 11 et 13.

- 1 -                    0002402

R E V E N D I C A T I O N S
--------------------------------

1.        Aspirateur du type comportant un circuit principal dans lequel de l'air à épurer, entraîné par une soufflerie (1), pénètre par une entrée et traverse au moins
un premier moyen de filtrage (4) comprenant un liquide
vidangeable de filtration (5) puis au moins un second
moyen de filtrage (11) comprenant un corps poreux avant
d'être évacué à l'extérieur, caractérisé en ce qu'il
comprend en outre, un circuit de dérivation (12, 14, 3)
dans lequel est entraînée une partie de l'air se trouvant dans le circuit principal immédiatement en amont du
second moyen de filtrage pour être réinjectée en un point
du circuit principal situé en amont du premier moyen de
filtrage.

2.        Aspirateur selon la revendication 1, caractérisé
en ce que le second moyen de filtrage comprend au moins
un filtre tubulaire en matière poreuse (11), dont le volume intérieur est situé à la fois sur le circuit principal
et sur le circuit de dérivation.

3.        Aspirateur selon l'une quelconque des revendication 1 et 2, caractérisé en ce que l'air dans le circuit
de dérivation est entraîné par une dépression établie
dans une partie périphérique (3d) d'une chambre (3) qui
est située à la jonction du circuit principal et du circuit de dérivation en amont du premier moyen de filtrage,
chambre dont la partie centrale est parcourue sous la forme de jet, par l'air à épurer propulsé par la soufflerie,
un conduit d'amenée d'air (2) du circuit principal débouchant dans ladite partie centrale de cette chambre et un
conduit d'amenée d'air (14) du circuit de dérivation débouchant (en 3a) dans ladite partie périphérique de ladite
chambre.

Fig. 1

Fig. 2

Fig. 3

0002402

<table>
<tr><td colspan="2"><strong>Office européen des brevets</strong></td><td><strong>RAPPORT DE RECHERCHE EUROPEENNE</strong></td><td>Numéro de la demande<br>EP 78 40 0180</td></tr>
</table>

| **DOCUMENTS CONSIDERES COMME PERTINENTS** | | | **CLASSEMENT DE LA DEMANDE (Int. Cl.²)** |
|---|---|---|---|
| Catégorie | Citation du document avec indication, en cas de besoin, des parties pertinentes | Revendica-tion concernée | |
| | <u>US – A – 3 824 771</u> (WILLIAMS)<br>* Figure 4; colonne 7, lignes 47-68 * | 1 | A 47 L 9/10<br>B 01 D 50/00 |
| | <u>FR – A – 1 366 013</u> (JOHNSTON BROTHERS)<br>* Figure 1 * | 1 | |
| | <u>FR – A – 1 140 398</u> (ASBRINK)<br>* Résumé; figures * | 1 | **DOMAINES TECHNIQUES RECHERCHES (Int. Cl.²)** |
| | <u>GB – A – 1 272 277</u> (MILLER)<br>* Figure 1a; page 5, lignes 64-77 * | 1 | A 47 L 9/00<br>B 01 D 50/00<br>E 01 H 1/00<br>B 22 D 45/00 |
| | <u>US – A – 4 047 910</u> (KROCKTA)<br>* Résumé; figures * | 1 | |
| | <u>US – A – 1 856 685</u> (ANDERSON)<br>* Figures 3 et 7 * | 1 | **CATEGORIE DES DOCUMENTS CITES** |
| | <u>GB – A – 737 457</u> (PNEUM.CONVEYORS)<br>* Figure 1 * | 1 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| | Le présent rapport de recherche a été établi pour toutes les revendications | | &: membre de la même famille, document correspondant |
| Lieu de la recherche<br>La Haye | Date d'achèvement de la recherche<br>15-02-1979 | | Examinateur<br>D'HULSTER |

OEB Form 1503.1  06.78